# EUROPEAN PATENT APPLICATION

(11) **EP 1 333 617 A2**
(43) Date of publication of application: **06.08.2003**
(21) Application number: 03002081.2
(22) Date of filing: 30.01.2003
(51) Int. Cl.: H04L 12/28, H04M 7/00, H04Q 11/04

(54) **VoIP (Voice over Internet Protocol) -compliant cable modem**

(30) Priority: 31.01.2002 JP 2002023922
(71) Applicant: Kabushiki Kaisha Toshiba, Tokyo (JP)
(72) Inventor: Furuta, Tetsuro, Kabushiki Kaisha Toshiba, Tokyo 105-8001 (JP)
(74) Representative: HOFFMANN - EITLE

(57) **Abstract**

A cable modem (10) has functions of packetizing a voice signal and transmitting/receiving the packetized voice signal to/from a connected communication device over an IP network. The cable modem (10) includes a communication unit (41,42) which transmits/receives a signal over the IP network, a detection unit (43) which detects information on the connected communication device from the signal received by the communication unit, and a display unit (51) which displays the information on the connected communication device included in the signal detected by the detection unit.

## Description

The present invention relates to a VoIP-compliant cable modem that is connected in use to an IP network such as a CATV (Cable Television) network.

With recent popularization of the Internet, there is an increasing demand for data communication services in homes. In this situation, standards for a communication protocol, called DOCSIS (Data Over Cable Service Interface Specification), which enables IP (Internet Protocol) communication on CATV networks, as well as standards for qualification tests for associated apparatuses, have been formulated. Thereby, compatibility among venders and price reduction have been achieved, and cable modems have widely been used more and more. Cable modems realize high-speed data communication of several Mbps in homes, and enable use of various applications for moving picture distribution, voice calls, etc.

In these years, if a VoIP-compliant cable modem is installed in a home, both a high-speed data communication service and a telephone service using VoIP technology are available. The cable modem not only realizes voice calls but also supports various telephone service functions. A Caller ID (Identification) function that displays an originating telephone number is one of such telephone service functions. When the Caller ID function is used, the telephone needs to support this function.

When the cable modem has received a Caller ID signal (signaling message) indicative of a digitized originating telephone number, etc. over an IP network such as a CATV network, the cable modem converts the Caller ID signal to an analog signal and sends the analog signal to a telephone with a Caller ID function via an analog interface. Based on the signal from the cable modem, the telephone displays the Caller ID (originating telephone number) on its display.

In the prior art, as described above, the cable modem converts the digitized Caller ID signal to an analog signal and sends it to the telephone that supports the Caller ID function. Thereby, the Caller ID can be displayed.

In short, whether the Caller ID function is available or not depends on whether the telephone supports the Caller ID function or not. If the telephone does not support the Caller ID function, the Caller ID function cannot be used. Even if the telephone supports the Caller ID function, the Caller ID function cannot be used if the display is inoperable due to battery shutoff or the like.

The present invention has been made in consideration of the above circumstances, and the object of the invention is to provide a cable modem capable of using a Caller ID function without depending on a telephone.

According to an aspect of the invention, there is provided a cable modem having functions of packetizing a voice signal and transmitting/receiving the packetized voice signal to/from a connected communication device over an IP network, comprising: a communication unit which transmits/receives a signal over the IP network; a detection unit which detects information on the connected communication device from the signal received by the communication unit; and a display unit which displays the information on the connected communication device included in the signal detected by the detection unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a VoIP system wherein a cable modem 10 according to an embodiment of the invention is used;
FIG. 2 is a block diagram showing a detailed structure of a VoIP-compliant cable modem 10 shown in FIG. 1;
FIG. 3 is a flow chart illustrating the operation of the Caller ID function of the cable modem 10;
FIG. 4 shows an example of registration of a plurality of Caller IDs in a Caller ID table 46a;
FIGS. 5A, 5B and 5C are examples of display of Caller IDs; and
FIG. 6 is a flow chart illustrating an operational process associated with Caller IDs displayed on a display 51.

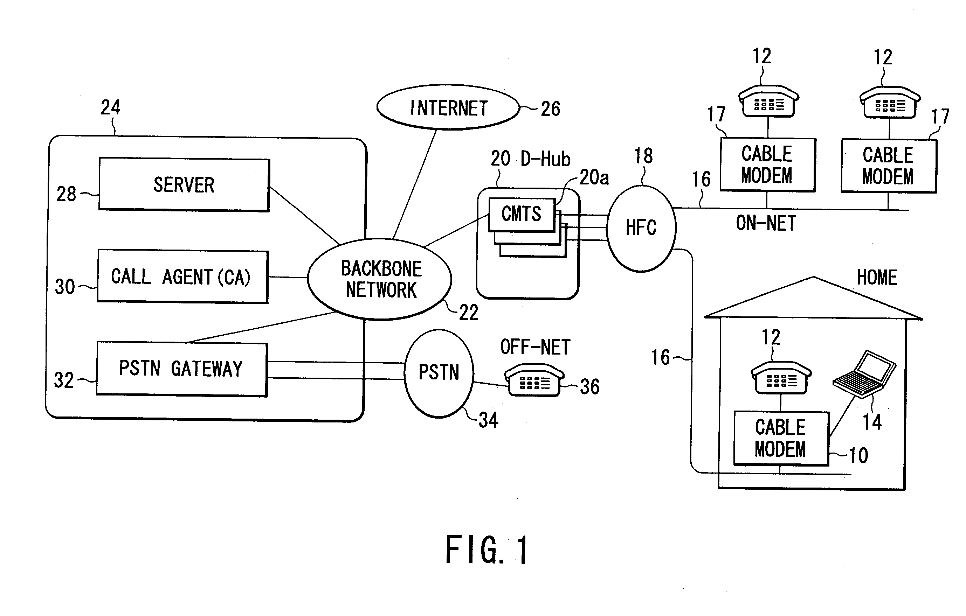

An embodiment of the present invention will now be described with reference to the accompanying drawings. FIG. 1 is a block diagram showing a VoIP system wherein a cable modem 10 according to the embodiment of the invention is used. The cable modem 10 in this embodiment is used, for example, in a home. The cable modem 10 supports DOCSIS (Data Over Cable Service Interface Specification) protocols and is connected to a CATV network to realize high-speed data services and telephone services using VoIP technology. The VoIP-compliant cable modem 10 is also known as, e.g. an EMTA (Embedded Multimedia Terminal Adapter). The cable modem 10 has functions of packetizing a voice signal and transmitting/receiving the packetized signal via an IP network. Assume that the cable modem 10 supports, as one of telephone service functions, a Caller ID function (information display function) for displaying an originating telephone number. According to this embodiment, even if a telephone 12 connected to the cable modem 10 does not support the Caller ID function, the cable modem 10 has the function of displaying the Caller ID (originating telephone number). The cable modem 10 includes an analog interface for connection to the telephone 12, and a PC interface for connection to a personal computer 14. The cable modem 10 also includes a CATV (Cable Television) network interface for connection to a CATV network 16.

Other cable modems 17 have the same structure as the cable modem 10. A telephone 12 is connected to the associated cable modem 17 via an analog interface. Each cable modem 17 is connected to the CATV network 16 via a CATV network interface. Using the VoIP functions of the cable modem 10 and cable modem 17, voice calls can be performed between the telephone 12 connected to the cable modem 10 and the telephone 12 connected to the cable modem 17.

The CATV network 16 is connected to a D-Hub (Distribution Hub) 20 (CMTS (Cable Modem Termination System) 20a) that is provided on an HFC (Hybrid Fiber Coaxial) 18.

The CMTS 20a is also called a cable modem terminal unit, a head-end modem, a cable router, etc. The CMTS 20a is connected via a backbone network 22 to a head-end system 24 and the Internet 26. The head-end system 24 includes a server 28, a call agent 30 and a PSTN gateway 32. The server 28 effects a control for providing data service and VoIP service. The server 28 performs communication controls to, for example, control cabled modems and allow or prohibit data service and VoIP service, based on various protocols (e.g. DHCP (Dynamic Host Configuration Protocol)/TFTP (Trivial File Transfer Protocol)/SNMP (Simple Network Management Protocol)). The call agent 30 controls the cable modem 10. The call agent 30 functions to execute signaling processes of, e.g. establishing/releasing call channels between cable modems or between the cable modem 10 and PSTN gateway 32. The PSTN gateway 32 performs signaling and voice data analog/digital conversion between the PSTN (Public Switched Telephone Network) 34 and the digital network. When a call is performed between the telephone of the digital network (telephone 12 connected to cable modem 17, telephone 12 connected to cable modem 10) and a telephone 36 of PSTN 34, the PSTN gateway 32 performs protocol conversion for packet switching and circuit switching.

A telephone number is preset in the telephone 12 connected to the cable modem 10, 17. On the other hand, an IP address is preset in the cable modem 10, 17. The call agent 30 manages the telephone number of the telephone 12 and the IP address of the cable modem 10, 17. If a destination telephone number is dialed from the telephone 12, the cable modem 10 notifies the call agent 30 of the dialed number. Based on the dialed number told from the cable modem 10, the call agent 30 determines whether a destination side is the cable modem 17 or PSTN gateway 32, for instance. The call agent 30 notifies the originating-side cable modem 10 of the IP address of the destination-side cable modem 17 or PSTN gateway 32. The originating-side cable modem 10 establishes connection with the destination based on the destination-side IP address told from the call agent 30, thereby enabling transmission/reception of voice packets according to VoIP.

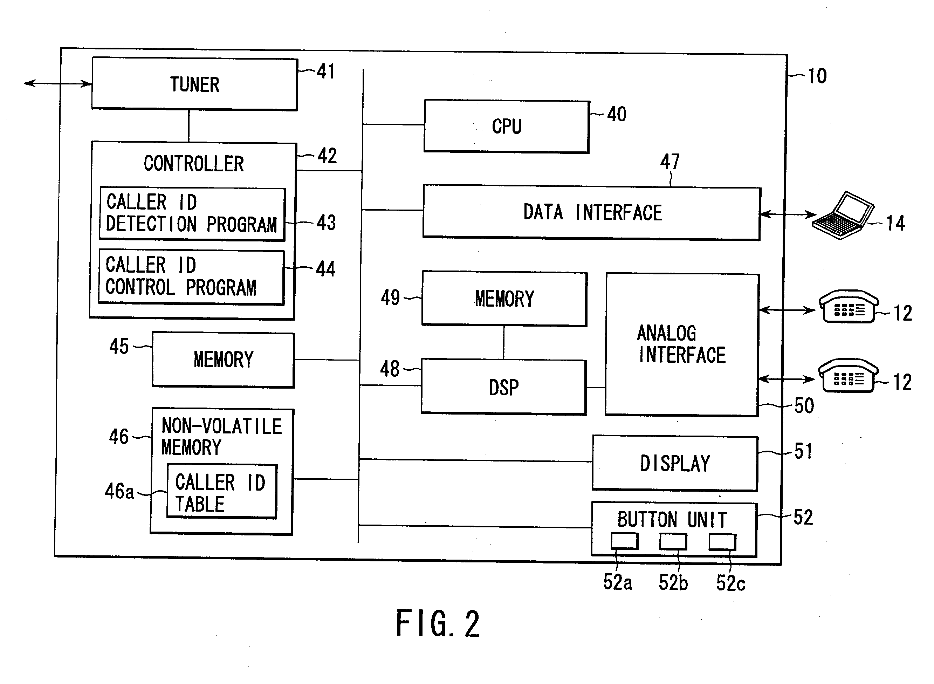

FIG. 2 is a block diagram showing a detailed structure of the VoIP-compliant cable modem 10 shown in FIG. 1. As is shown in FIG. 2, the cable modem 10 comprises a CPU 40, a tuner 41, a controller 42, a memory 45, a non-volatile memory 46, a data interface 47, a DSP 48, a memory 49, an analog interface 50, a display 51 and a button unit 52.

The CPU 40 controls respective parts of the cable modem 10 according to programs and data stored in the memory 45 and non-volatile memory 46. Under control of the controller 42, the tuner 41 receives a DOCSIS-compliant downstream packet signal (a signal from the other communication device) and sends a DOCSIS-compliant upstream packet signal (a signal to the other communication device).

The controller 42 has a function of controlling DOCSIS protocols. This function of controlling DOCSIS protocols has conventionally been realized, and a detailed description thereof is omitted. In addition, the controller 42 is provided with a Caller ID detection program 43 and a Caller ID control program 44 for realizing the Caller ID function (information display function). Using the Caller ID detection program 43, the controller 42 detects a Caller ID signal (Signaling Message) from the packet signal received via the CATV network 16. Using the Caller ID control program 44, the controller 42 executes data registration and display of an originating telephone number, etc. corresponding to the Caller ID signal. The memory 45 stores DOCSIS protocols and programs and data for controlling VoIP.

The non-volatile memory 46 stores a Caller ID table 46a comprising data on the originating telephone number, etc. acquired by the Caller ID function. The data interface 47 is an interface connectable to the personal computer 14 for providing high-speed data services based on DOCSIS. Specifically, the data interface 47 is realized by 10BASE-T, 100BASE-T, USB (Universal Serial Bus), or HomePNA (Home Phoneline Networking Alliance). The DSP (Digital Signal Processor) 48 performs analog/digital conversion of voice signals when a VoIP call is made through the telephone 12 connected via the analog/digital interface 50. In addition, the DSP 48 converts a digital Caller ID signal received via the tuner 41 to an analog signal, and sends the analog signal to the telephone 12 via the analog interface 50. If the telephone 12 supports the Caller ID function, it can display the Caller ID based on the analog Caller ID signal. The memory 49 is used as a working area when the DSP 48 executes analog/digital conversion.

The analog interface 50 is an interface for connection between the DSP 48 and analog telephone 12. The display 51 displays various data and presents it to the user under control of the CPU 40.

When the Caller ID function is used, the display 51 displays a Caller ID (an originating telephone number). The button unit 52 comprises a plurality of buttons for inputting various instructions from the user. The button unit 52 includes, for example, an upward button 52a and a downward button 52b that are used when the Caller ID is displayed on the display 51 by the Caller ID function. The upward button 52a and downward button 52b are used to input a display change instruction in order to display a desired Caller ID in a case where a plurality of Caller IDs are registered on the Caller ID table 46a stored in the non-volatile memory 46. A dial button 52c included in the button unit 52 is used to instruct a call from the cable modem 10 to the communication device of the Call ID displayed on the display 51.

The operation of the cable modem 10 according to the embodiment will now be described.

The cable modem 10 selects a downstream signal obtained through the tuner 41 via the HFC 18. The cable modem 10 controls high-speed data services and telephone services by the CPU 40 and controller 42, provides data services to the personal computer 14 connected via the data interface 47, and provides telephone services to the telephone 12 connected via the analog interface 50.

In the Caller ID function that is one of the telephone services, the controller 42 detects a digital Caller ID signal according to the Caller ID detection program 43. The digital Caller ID signal is converted to an analog signal by the DSP 48 and delivered to the telephone 12 via the analog interface 50. Thereby, the telephone 12 can display the Caller ID (originating telephone number) on its display on the basis of the analog Caller ID signal acquired from the cable modem 10. If the telephone 12 does not support the Caller ID function or the display is disabled due to battery shutoff, etc., the analog Caller ID signal is ignored by the telephone and the user cannot view the Caller ID.

In the meantime, independently from the telephone 12, the cable modem 10 has the Caller ID function, as will be described below. Thereby, the cable modem 10 can register the Caller ID (originating telephone number) acquired from the Caller ID signal on the Caller ID table 46a in the non-volatile memory 46 and can display it on the display 51.

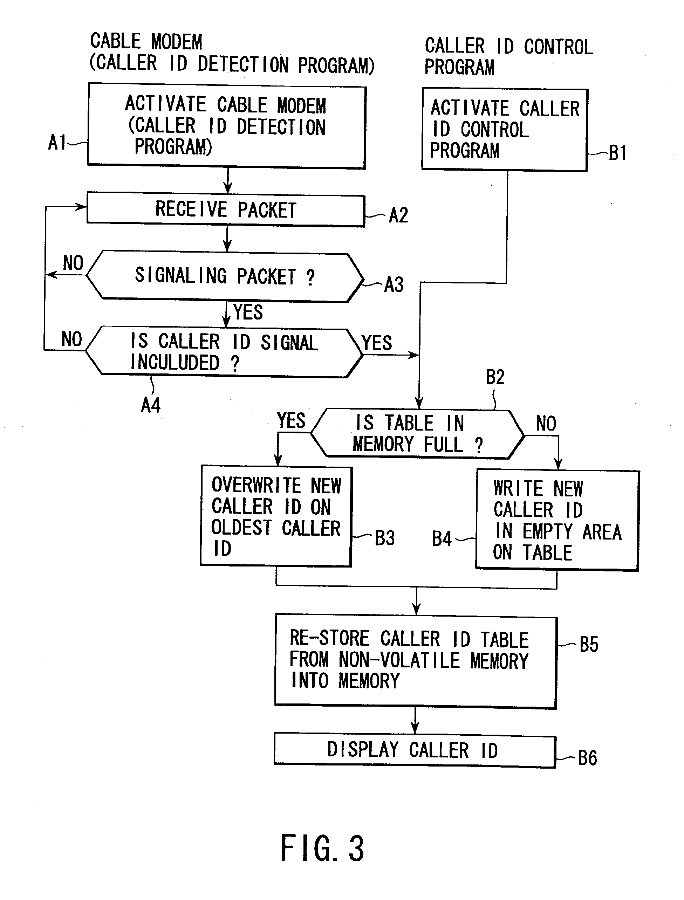

The operation of the Caller ID function by the cable modem 10 will now be described with reference to the flow chart of FIG. 3.

Where the execution of the Caller ID function is effected in the cable modem 10, the Caller ID detection program 43 and Caller ID control program 44 are activated (step A1, B1).

When the tuner 41 has received a packet (step A2), the controller 42 determines under control of the Caller ID detection program 43 whether the received packet is a signaling packet or not (step A3). If it is a signaling packet (Yes in step A3), the controller 42 determines whether a Caller ID signal indicative of the originating telephone number is included in the signaling packet (step A4). If the received packet is not a signaling packet (No in step A3) or if the Caller ID signal is not included in the signaling packet (No in step A4), the detection of the Caller ID signal in the received packet is continued in a similar manner (steps A2 to A3). When the Caller ID signal has successfully been obtained from the received signaling packet (Yes in step A4), control is passed from the Caller ID detection program 43 to the Caller ID control program 44.

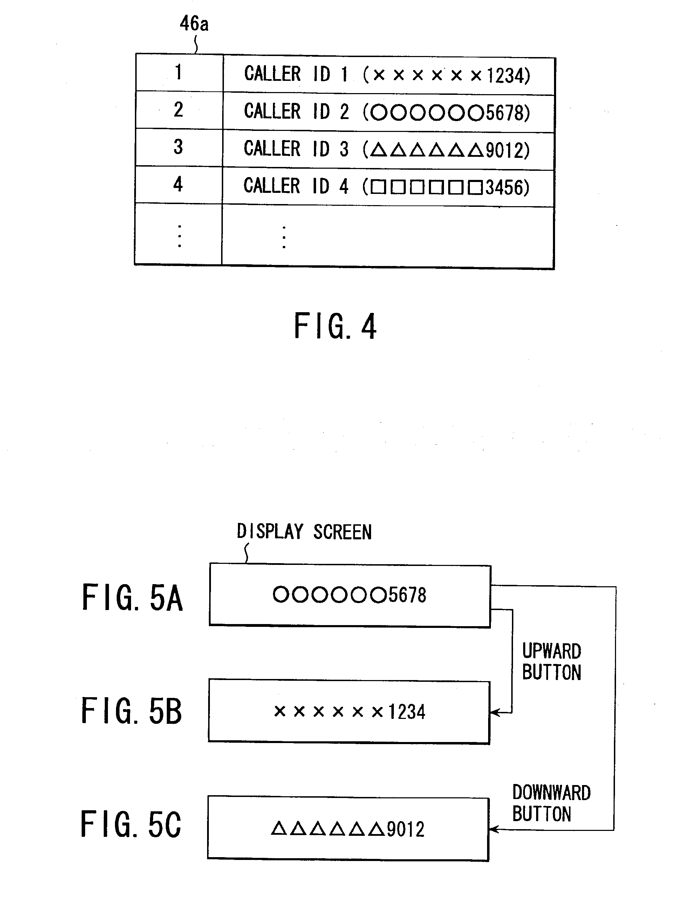

The Caller ID control program 44 confirms whether a predetermined number of Caller IDs have been registered on the Caller ID table 46a stored in the non-volatile memory 46, that is, whether the Caller ID table 46a is full or not (step B2). If a predetermined number of Caller IDs have been registered on the Caller ID table 46a and the Caller ID table 46a is full (Yes in step B2), a newly received Caller ID is overwritten on the oldest registered Caller ID on the Caller ID table 46a (step B3). If the Caller ID table 46a has an empty area (No in step B2), a newly received Caller ID is registered in the empty area on the table (step B4). FIG. 4 shows an example of registration of a plurality of Caller IDs in the Caller ID table 46a.

The Caller ID control program 44 re-stores the Caller ID table 46a from the non-volatile memory 46 into the memory 45 (step B5). Based on the Caller ID table 46a, the newly received Caller ID is displayed on the display 51 (step B6). FIG. 5A shows the state in which a newly received Caller ID "○○○○○○5678" is displayed on the display 51. Thereby, even if the telephone 12 does not support the Caller ID function, the Caller ID (originating telephone number) can be confirmed on the display 51 provided on the cable modem 10.

The Caller ID detected by the Caller ID detection program 43 is converted to an analog signal by the DSP 48 and sent to the telephone 12 via the analog interface 50. If the telephone 12 supports the Caller ID function, the Caller ID is also displayed on the display of the telephone 12 and can be confirmed.

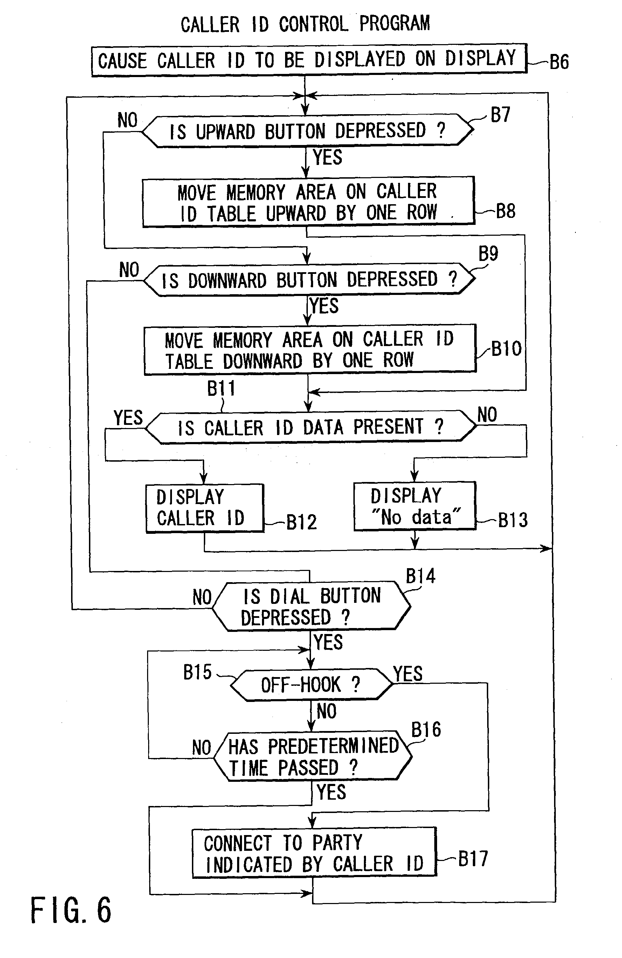

If the upward button 52a and downward button 52b of the button unit 52 are depressed, the display of the Caller ID registered on the Caller ID table 46a can be changed as desired. FIG. 6 is a flow chart illustrating an operational process associated with Caller IDs displayed on the display 51.

As regards the cable modem 10, a Caller ID that was previously received and registered in the Caller ID table 46a can be displayed, as desired, by a button operation (not illustrated) of the button unit 52.

If the upward button 52a is depressed in the state in which the Caller ID is displayed on the display 51 of the cable modem 10 (step B7), a Caller ID stored in an upper memory area on the Caller ID table 46a, relative to the position of the currently displayed Caller ID, is to be displayed (step B8). If a Caller ID is registered in this memory area (Yes in step B11), this Caller ID is displayed on the display 51. On the other hand, if a Caller ID is not registered in this memory area (No in step B11), characters "No data" for instance is displayed on the display 51, thereby indicating that no Caller ID is registered (step B13). FIG. 5B shows an example of a Caller ID that is to be displayed when the upward button 52a is depressed in the state in which the Caller ID is displayed as shown in FIG. 5A. Specifically, FIG. 5B shows a Caller ID "××××××1234" that is registered in a memory area 1, one row above a memory area 2 where "○○○○○○5678" is registered as shown in FIG. 4.

Similarly, if the downward button 52b is depressed (step B9), a Caller ID stored in a lower memory area on the Caller ID table 46a, relative to the position of the currently displayed Caller ID, is to be displayed (step B10). If a Caller ID is registered in this memory area (Yes in step B11), this Caller ID is displayed on the display 51. On the other hand, if a Caller ID is not registered in this memory area (No in step B11), characters "No data" for instance is displayed on the display 51, thereby indicating that no Caller ID is registered (step B13). FIG. 5C shows an example of a Caller ID that is to be displayed when the downward button 52b is depressed in the state in which the Caller ID is displayed as shown in FIG. 5A. Specifically, FIG. 5C shows a Caller ID "ΔΔΔΔΔΔ9012" that is registered in a memory area 3, one row below the memory area 2 where "○○○○○○5678" is registered as shown in FIG. 4.

A Caller ID to be displayed on the display 51 can be changed among the Caller IDs on the Caller ID Table 46a including previously registered ones by operating the upper button 52a and lower button 52b, and thus a desired Caller ID can be displayed.

In addition, if the dial button 52c is depressed in the state in which the Call ID is displayed on the display 51, the cable modem 10 according to the embodiment executes a connecting process for dialing the displayed Caller ID as a destination for connection.

Specifically, when the dial button 52c has been depressed in the state in which the Caller ID is displayed (step B14), the cable modem 10 confirms through the analog interface 50 whether the telephone 12 is off the hook and in the call-enabled state (step B15). If the telephone 12 is not in the off-hook state, the cable modem 10 waits for a predetermined time until it receives a notice that the telephone 12 is in the off-hook state (No in step b16, B15). If the telephone 12 is not set in the off-hook state even after a predetermined time period (Yes in step B16), a call is not enabled and thus the dialing of the displayed Caller ID is stopped.

On the other hand, if the cable modem 10 is notified that the telephone 12 is set in the off-hook state within the predetermined time period, the controller 42 informs the call agent 30 of the currently displayed Caller ID as a destination for connection, instead of the number to be dialed by the user, thus carrying out the connecting process (step B17).

Thus, even if the telephone 12 does not support the Calling ID function, the Calling ID function of the cable modem 10 can be used. Thereby, the Caller ID of the other communication device can be displayed on the display 51 and, by depressing the dial button 52c, the cable modem can easily connect to a communication device whose Caller ID has previously been received.

In this manner, the digitized Caller ID signal is detected by the cable modem 10, and the detected Caller ID is displayed on the display 51 provided on the cable modem 10. Thus, independently from the telephone 12, the Caller ID service can be enjoyed. Even where the telephone 12 does not support the Caller ID function, or even where the display of the telephone 12 that supports the Calling ID function is disabled due to battery shutoff, etc., the Caller ID service can be used.

In the above descriptions, the Caller ID signal is detected from the signal received from the originating side and the detected Caller ID (originating telephone number) is displayed. Alternatively, other information detectable from the signal received from the originating side may be displayed. Such other information includes a date/time, and attributes added by the originating communication device. In this case, too, various information can be displayed on the display 51 of cable modem 10 and presented to the user, independently from the telephone 12.

In the structure shown in FIG. 2, the Caller ID detection program 43 and Caller ID control program 44 are incorporated in the controller 42. Alternatively, these programs may be stored in the memory 45 and executed by the CPU 40 to detect the Caller ID signal and to control the display of the Caller ID. In this case, the Caller ID detection program 43 and Caller ID control program 44 may be stored in a recording medium, such as a magnetic disk (e.g. flexible disk, hard disk), an optical disk (e.g. CD-ROM, DVD) or a semiconductor memory, as computer-executable programs, and may be provided in various kinds of apparatuses. In addition, these programs may be transmitted via communication media and provided to various kinds of apparatuses. The apparatus (computer) that realizes the cable modem 10 of this embodiment carries out the above-described processes by reading the programs stored in the recording medium or by receiving the programs via communication media, and causing the programs to control the operations.

The cable modem 10 complies with VoIP (that is, it has functions of packetizing voice signals and transmitting/receiving them via an IP network). This invention, however, is applicable to a VoIP-compliant terminal adapter, a so-called stand-alone MTA (Multimedia Terminal Adapter). The stand-alone MTA is connected to an ordinary cable modem that is, in turn, connected to a CATV network, and has a function for providing telephone services. Besides, this invention is applicable to not only to an independent apparatus but also to an extension unit mounted in an information apparatus such as a personal computer.

## Claims

1. A cable modem (10, 17) having functions of packetizing a voice signal and transmitting/receiving the packetized voice signal to/from a connected communication device over an IP network, **characterized by** comprising:
a communication unit (41, 42) which transmits/receives a signal over the IP network;
a detection unit (43) which detects information on the connected communication device from the signal received by the communication unit; and
a display unit (51) which displays the information on the connected communication device included in the signal detected by the detection unit.

2. The cable modem according to claim 1, **characterized in that** the information on the connected communication device detected by the detection unit is a telephone number.

3. The cable modem according to claim 1, **characterized by** further comprising:
a table storing unit (46) which registers a plurality of information items detected by the detection unit;
an instruction unit (52) which instructs change of the information item to be displayed by the display unit, among the plurality of information items stored by the table storing unit; and
a switching unit (40) which switches the information item to be displayed by the display unit, in accordance with the instruction for changing the information item by the instruction unit.

4. The cable modem according to claim 3, **characterized by** further comprising:
a connection instruction unit (52) which instructs execution of connection to the communication device to be connected, the information on which has been displayed by the display unit; and
a connection processing unit (41, 42) which executes a connecting process for connection with the communication device to be connected, the information on which has been displayed by the display unit, when the connection instruction unit has instructed the execution of connection.

5. The cable modem according to claim 4, **characterized by** further comprising:
an interface (50) for connection to a telephone to be used for a voice call;
a determination unit (40) which determines whether the telephone connected to the interface is in a voice call-enabled state, when the connection instruction unit has instructed the execution of connection; and
a canceling unit (40) which cancels the connecting process by the connection processing unit, when the determination unit has determined that the telephone is not in the voice call-enabled state.

6. The cable modem according to claim 3, **characterized in that** the table storing unit comprises a non-volatile memory (46).

7. A cable modem having functions of packetizing a voice signal and transmitting/receiving the packetized voice signal to/from a connected communication device over an IP network, **characterized by** comprising:
a tuner (41) which transmits/receives a packet signal over the IP network;
a non-volatile memory (46);
a controller (42) which detects, from the packet signal received by the tuner, a Caller ID signal including data indicative of a telephone number of the connected communication device, and stores the data included in the Caller ID signal into the non-volatile memory; and
a display unit (51) which displays the data stored in the non-volatile memory.
